(19) Europäisches Patentamt
European Patent Office
Office européen des brevets

(11) EP 3 591 423 A1

(12) EUROPEAN PATENT APPLICATION

(43) Date of publication:
08.01.2020 Bulletin 2020/02

(21) Application number: 18181231.4

(22) Date of filing: 02.07.2018

(51) Int Cl.:
G01S 7/40 (2006.01)  G01S 7/02 (2006.01)
G01S 13/50 (2006.01)  G01S 13/88 (2006.01)
G01S 13/56 (2006.01)  H04B 1/10 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Signify Holding B.V.
5656 AE Eindhoven (NL)

(72) Inventor: The designation of the inventor has not
yet been filed

(74) Representative: Verweij, Petronella Daniëlle et al
Signify Netherlands B.V.
Intellectual Property
High Tech Campus 7
5656 AE Eindhoven (NL)

(54) **SENSING ARRANGEMENT WITH INTERFERENCE DETECTION FUNCTIONALITY**

(57)    A sensing arrangement for outputting a signal responsive to a first external excitation, in which errors introduced during a generation of the output signal, due to a second external excitation, can be identified. The sensing arrangement has a processing circuit that processes a sensing signal, the processing circuit comprising at least one component that modifies the sensing signal in response to a second external excitation. The sensing arrangement comprises a corresponding signal generator that generates a second signal responsive to this second external excitation, so that a reliability of the processed sensing signal can be assessed.

FIG. 1

**Description**

FIELD OF THE INVENTION

This invention relates to sensing arrangements, and in particular to sensing arrangements for sensing an external excitation.

BACKGROUND OF THE INVENTION

In the lighting industry, there is an increasing trend of using a sensing arrangement for controlling an operation of a lighting system, rather than a manually operated switch. In particular, sensing arrangements responsive to an external excitation have been used to trigger or otherwise control the operation of one or more luminaires of a lighting system.

Typical sensing arrangements are adapted to generate a sensing signal indicative of a particular external excitation. Examples of external excitations for sensing include electromagnetic waves (such as light, infrared or microwave), motion/movement and so on.

However, a sensing arrangement can be susceptible to noise due to interference from other external excitations, i.e. external excitations that the sensing arrangement is not designed to sense. "Cancellation of Unwanted Doppler Radar Sensor Motion Using Empirical Mode Decomposition" (Isar Mostafanezhad, IEEE SENSORS JOURNAL, VOL. 13, NO. 5, MAY 2013) discusses the influence of motion on a Doppler radar. More specifically, motion of the sensor introduces path length variation of the sensor itself that phase modulates a microwave signal that is detected by the Doppler radar of the sensor and causes a mis-trigger of the sensor. The prior art proposes to use a motion sensor, such as an accelerometer, to detect the motion and compensate for it in the detection of the microwave signal.

SUMMARY OF THE INVENTION

Beside detection of phase shift, a sensing arrangement may also process said sensing signal, e.g. using amplifiers and/or filters, for output to another device such as a control unit for a lighting system. The inventor has found that, different from the prior art in which a motion causes phase shift in the detected microwave signal, the motion may change the electrical characteristic of certain components in the amplifier/filter, thus the detection result is also influenced. If the sensing arrangement is for a lighting system, such interference can lead to false triggering or incorrect control of the connected lighting system. There is therefore a desire to identify and/or reduce the influence of undesired external excitations on a motion-sensitive component of the sensing arrangement adapted to detect a particular, desired external excitation.

The invention is defined by the claims.

It is a concept of the invention to provide a sensing arrangement capable of detecting whether a motion-sensitive component has been subject to interference during a processing of the sensing signal. Thus, a sensing arrangement can self-determine whether a processed sensing signal is a reliable indicator of the excitation for which the unprocessed sensing signal is designed to detect/sense. A key difference from the prior art cited above is that, in the prior art, there is no component of the processing system that changes its inherent electrical characteristic due to motion, thus there is no detection or compensation for this change of inherent electrical characteristic in the prior art.

The inventors have also recognized that the inherent electrical characteristics of a component of a processing system could vary due to the influence of other excitations, i.e. different excitations than motion. Thus the second, interfering excitation below aims to cover any excitations that is different from the main excitation which the sensor is designed to detect.

According to examples in accordance with an aspect of the invention, there is provided a sensing arrangement, comprising: an interface adapted to: connect to a sensing circuit adapted to sense a first excitation; and receive a sensing signal, generated by the sensing circuit, responsive to the first excitation; a processing circuit adapted to process the sensing signal to thereby generate a processed sensing signal, wherein the processing circuit comprises at least one component that is able to change its inherent electrical characteristic and modify the sensing signal responsive to a second, interfering excitation; a signal generator adapted to determine whether the at least one component has been influenced by the second excitation and generate a second signal accordingly; and a signal analyzer adapted to: receive the processed sensing signal and the second signal; and analyze the processed sensing signal using the second signal to identify whether the processed sensing signal has been modified by the at least one component due to the second excitation and thereby rendered unreliable.

The present invention recognizes that a processing circuit of a sensing arrangement can generate noise or undesirable fluctuations in a (processed) sensing signal due to the influence of an undesired excitation (i.e. the second excitation). Preferably the first excitation is from an external source and the undesired excitation (i.e. the second, interfering excitation) is also from an external source (i.e. they are both external excitations).

Preferably, the sensing arrangement comprises the sensing circuit.

Thus, there is proposed a sensing arrangement that detects when an undesired excitation, i.e. the second excitation, interferes with a component of a processing circuit for a sensing signal representative of a desired excitation, i.e. the first excitation. In this way, a sensing arrangement can detect whether an interfering excitation has modified the processing of a sensing signal, thereby rendering the processed sensing signal unreliable, e.g. noisy, incorrect or otherwise not accurately representative of the first excitation.

A sensing circuit is adapted to generate a sensing signal representative of a desired or first excitation. The sensing signal is responsive to the first excitation, so that deviations from a norm, e.g. a background noise level, of the sensing signal are indicative of the presence of the first excitation.

The processing circuit processes, e.g. amplifies and/or filters, the sensing signal to generate a processed sensing signal. At least one component of the processing circuit interferes with or otherwise modifies (e.g. undesirably or unintentionally) the sensing signal in response to a second excitation. This introduces error into the processed sensing signal, resulting from the second excitation. This error may be falsely mistaken by an external controller, reliant on the sensing arrangement, as indicative of the presence of the first excitation when none exists. By using embodiments of the invention, this sensing signal is verified against such an error.

By way of example, the second excitation may be a movement or vibration of the sensing arrangement, which could cause a component of the processing circuit to undesirably modify the processed sensing signal.

The signal generator adapted to determine whether the at least one component has been influenced by the second excitation can be implemented by a direct detection device that is adapted to couple to the at least one component and measure a change in the electrical characteristic. Alternatively, the signal generator can be implemented by an indirect detection that is adapted to detect the occurrence of the second, interfering excitation itself, by any feasible method.

Preferably, the signal generator may comprise a component of the same type, and preferably of the same rating, as the component in the processing circuit, and this component in the signal generator is adapted to generate a second signal representative of the (undesired) second interfering excitation. The second signal may therefore indicate whether the at least one component in the processing has been influenced by the second excitation, and in turn the processed sensing signal has been (undesirably or unintentionally) modified by the at least one component of the processing circuit, and thereby rendered unreliable or potentially falsely indicative of the first external excitation.

The signal analyzer analyses the processed sensing signal using the second signal to deduce/determine whether the second interfering excitation has interfered with the processing of the sensing signal. In particular, the signal analyzer may compare the second signal to the processed sensing signal to determine whether the second excitation has interfered with the processed sensing signal.

For example, a similar pattern in both the second signal and the processed sensing signal could indicate that the second excitation has undesirably modified or interfered with the processed sensing signal. An absence, in the second signal, of a pattern found in the processed sensing signal could indicate that no second excitation has interfered with the processed sensing signal (i.e. the sensing signal accurately represents a sensed first excitation and is therefore reliable).

Thus, the proposed sensing arrangement is able to recognize the presence of unwanted noise/fluctuations in a processed sensing signal, thereby improving the reliability of the sensing arrangement. This increases the number of sensing arrangements that can use processing circuits in their sensing arrangements, which processing circuits allow for increased sensitivity of such sensing arrangements. In particular, sensing arrangements that generate only a low-power or low signal-to-noise ratio sensing signal can be accurately processed, with the assurance that any noise introduced by another excitation during processing can be recognized.

Preferably, the sensing circuit is adapted to sense a frequency shift of a received electromagnetic signal with respect to a transmitted electromagnetic signal as the first excitation, wherein the frequency shift is due to Doppler effect and preferably wherein the electromagnetic signal is a microwave signal.

Embodiments of the invention are particularly advantageous when used with a sensing arrangement for sensing a Doppler shift of an electromagnetic signal, and preferably a microwave signal. This is because a sensing circuit for detecting a Doppler shift typically only outputs a very weak (e.g. very low voltage) and/or noisy sensing signal. Thus, such sensing signals usually require significant processing, such as filtering and amplifying, to acquire a processed sensing signal of suitable amplitude and/or signal-to-noise ratio for input to a processing unit such as an MCU (microcontroller unit). This effect is even more pronounced in sensing circuits for detecting a Doppler shift of a microwave signal, due to the very low power of such sensing signals.

Processing circuits for processing a frequency shift of an electromagnetic signal are particularly susceptible to interference from a second (undesired) excitation, due at least to the large amplification that is typically required. Thus, the present invention recognizes that it would be particularly advantageous to employ a sensing arrangement capable of self-determining whether a component in the processing circuit, and thereby the processed sensing signal, is unreliable due to the presence of such a second excitation.

For the sake of clarity, it is noted that a microwave signal is generally considered as referring to any electromagnetic signal having a frequency of between 300 MHz and 300 GHz and/or a wavelength of from 0.001m to 1m.

Preferably, the at least one component that modifies the sensing signal comprises at least one capacitor, and the second interfering excitation comprises a movement/vibration of the at least one capacitor that influences the capacitance of the at least one capacitor due to piezoelectric effects.

It has been recognized that capacitors are particularly susceptible to undesirably modifying a signal in response to an unwanted excitation, in particular a vibration. It would therefore be desirable to generate a second signal representative of when at least a capacitor of the processing circuit undesirably modifies a processing of a sensing signal in response to a second (undesired) excitation.

In particular, it is recognized that a capacitor may undesirably modify a signal in response to a movement of the sensing arrangement, due to a piezoelectric effect of a capacitor. Thus, the second excitation may be a movement of the sensing arrangement.

In preferable embodiments, the signal generator comprises a corresponding at least one component of the same type as the at least one component of the processing circuit and adapted to modify the second signal influenced by said second interfering excitation.

This embodiment gives a quite reliable implementation since the concerned component in the processing circuit and the component in the signal generator are the same type, and preferably the same rating. Thus, there is high likelihood that the same second excitation would influence both components, and in a similar manner or with a similar magnitude, and the determination in the signal generator would be highly accurate. Alternatively, the signal generator could use a different type of element to detect the second excitation as long as it can reflect whether the at least one component of the processing circuit is influenced by the second excitation.

In preferable embodiments, the processing circuit comprises a sub-processing unit adapted to process the sensing signal, and the signal generator comprises a corresponding sub-processing unit having the same topology as the sub-processing unit (of the processing circuit), thereby having components of a type identical to that of the at least one component of the sub-processing unit.

In such embodiments, the concerned components are present in both the processing circuit and the signal generator, such that a signal provided to the corresponding sub-processing unit would be processed in a functionally identical manner to a signal provided to the sub-processing unit of the processing circuit (barring any minor and natural differences, e.g. due to manufacturing tolerances, which are typically negligible).

This ensures that a second signal can accurately reflect interference or errors found in the processed sensing signal, as the second signal generator will perform a same modification to the second signal (in response to the second excitation) as the processing circuit performs when processing the sensing signal, influenced by the second excitation.

The corresponding sub-processing unit preferably contains the same number and type of components as the sub-processing unit, the topology or layout of the two units being functionally identical.

Using functionally identical circuits, e.g. of a same topology, ensures that the minimum number of components are added to the sensing arrangement whilst preserving accuracy, and means that is it possible to reuse the same components found in the processing circuit, thereby reducing a cost.

Note that, in addition to comprising the same sub-circuit(s) or sub-processing unit(s), the circuit in the signal generator could also comprise one or more other sub-circuits or sub-processing units different from the circuits in the processing circuit. Alternatively, the signal generator could have a topology different from the topology of the processing circuit. The design of the signal generator may depend on the practical requirement in accuracy, cost, etc.

Preferably, the sub-processing unit of the processing circuit comprises an amplifying circuit, and the corresponding sub-processing unit of the signal generator comprises a corresponding amplifying circuit.

It has been recognized that the magnitude, severity and frequency of errors introduced by an amplifying circuit, by a second excitation, is particularly high. Thus, it would be preferable to identify the presence of errors due to the second excitation occurring during amplification of a sensing signal.

In some embodiments, the sub-processing unit comprises a first operational amplifier adapted to output an amplified sensing signal, with at least one capacitor that modifies the amplified sensing signal in response to the second excitation; and the corresponding sub-processing unit comprises a second operational amplifier with at least one capacitor that modifies an output of the second operational amplifier in response to the second excitation, said modified output of the second operational amplifier forming the second signal.

Use of a capacitor in an operational amplifier is a well-known solution to providing an amplifier, thus the noise of an amplifier is quite subject to vibration due to the capacitor's piezoelectric effect. This embodiment can solve this problem.

In further embodiments, the at least one capacitor of the sub-processing unit is connected between an output of the first operational amplifier of the sub-processing unit and an input of the first operational amplifier of the sub-processing unit; and at least one capacitor of the corresponding sub-processing unit is connected between an output of the second operational amplifier of the corresponding sub-processing unit and an input of the second operational amplifier of the corresponding sub-processing unit.

This is a typical topology for an operational amplifier that uses the capacitor as a feedback mechanism. The feedback is introduces noise caused by vibration due to the capacitor's piezoelectric effect, which influences the final output. This embodiment can solve this problem.

At least one capacitor of the sub-processing unit may be connected between an input to the sub-processing unit and an input to the first operational amplifier of the sub-processing unit; and, correspondingly, at least one capacitor of the corresponding sub-processing unit may be connected between an input to the corresponding sub-processing unit and an input to the second operational amplifier of the corresponding sub-processing unit.

This is another typical topology for an operational amplifier that uses the capacitor to block a DC component, typically at an input to the operational amplifier, which capacitor is also known as a coupling/blocking capacitor. The amplifier's output would be influenced due to the capacitor's piezoelectric effect introducing noise to the signal due to vibration. This embodiment can solve this problem.

The sub-processing unit of the processing circuit may comprise a filtering circuit, and the corresponding sub-processing unit may comprise a corresponding filtering circuit.

Filtering circuits can also introduce errors due to a second excitation during a filtering of the sensing signal. This is, in particular, due to the capacitors of typical filtering circuits responding to an excitation and introducing variation in the sensing signal. This embodiment can solve this problem.

In an embodiment, the processing circuit and the signal generator are distinct and separate from one another and the signal analyzer comprises two inputs respectively coupled to the processing circuit and the signal generator.

For this embodiment, it is easy for the signal analyzer to sample either or both of the processed sensing signal and the second signal.

In another embodiment, the sensing arrangement further comprises a switching circuit adapted to switch an input of the processing circuit between the sensing signal and a bias voltage, wherein: when the input of the processing circuit is the sensing signal, the processing circuit is adapted to generate the processed sensing signal; and when the input of the processing circuit is the bias voltage, the processing circuit is adapted to act as the signal generator and generate the second signal.

Thus, the processing circuit may also act as the signal generator. In particular, the processing circuit may be controlled to selectively output the processed sensing signal and the second signal.

By using the same circuitry to both generate the second signal and to process the sensing signal, an accuracy of the second signal can be improved (i.e. the second signal can better represent a noise of the processed sensing signal) and a cost of the sensing arrangement can be reduced (as there is no need to provide a dedicated signal generator).

The switching circuit may be adapted to alternate the input of the processing circuit between the sensing signal and a bias voltage. When coupled to the bias voltage, the processing circuit outputs the second signal, which is responsive to the second excitation. In embodiments, the signal analyzer may comprise an input coupled to the processing circuit and a signal selector adapted to distinguish between the processed sensing signal and the second signal at the input according to a switching state of the switching circuit.

The switching circuit may therefore cause the processing circuit to output a time-divided signal formed of two alternating portions. A first alternating portion being the processed sensing signal and the second alternating portion being of the second signal.

This increases an accuracy of the second signal, as it will better represent the undesired excitation that occurs during a processing of the processing circuit (as it is generated along with the processing of the sensing signal).

The signal analyzer may compare one or more characteristics of the processed sensing signal and the second signal to determine whether the processed sensing signal has been modified by the second excitation, wherein the one or more characteristics comprises one or more of: a frequency; amplitude; distribution; spectrum or temporal pattern.

According to examples in accordance with another aspect of the invention, there is provided a lighting system comprising: a sensing arrangement as previously described; at least one luminaire; and a control system for controlling the at least one luminaire based on the processed sensing signal if the analysis of the processed sensing signal identifies the processed sensing signal as not being modified by the second excitation.

The lighting system may be adapted wherein: the sensing circuit of the sensing arrangement is adapted for motion sensing, so that the processed sensed signal indicates a presence of a moving object proximate to the sensing arrangement; and the control system is adapted to trigger the at least one luminaire based on the processed sensed signal.

These and other aspects of the invention will be apparent from and elucidated with reference to the embodiment(s) described hereinafter.

BRIEF DESCRIPTION OF THE DRAWINGS

Examples of the invention will now be described in detail with reference to the accompanying drawings, in which:

Fig. 1 shows a block diagram of a sensing arrangement according to a first embodiment of the invention;
Figs. 2 to 4 illustrate waveforms for the processed sensing signal and the second signal in different scenarios;
Fig. 5 is a circuit diagram of a processing circuit for a sensing arrangement according to the first embodiment;
Fig. 6 is a circuit diagram of a signal generator for a sensing arrangement according to the first embodiment;
Fig. 7 is a block diagram of a sensing arrangement according to a second embodiment;
Fig. 8 illustrates waveforms for controlling switches of the sensing arrangement according to the second embodiment; and
Fig. 9 illustrates a lighting system according to an embodiment.

## DETAILED DESCRIPTION OF THE EMBODIMENTS

According to a concept of the invention, there is proposed a sensing arrangement for outputting a signal responsive to a first excitation, in which errors introduced during a generation of the output signal, due to a second excitation, can be identified. The sensing arrangement has a processing circuit that processes a sensing signal, the processing circuit comprising at least one component having an inherent electrical characteristic that changes in response to the second excitation and in turn modifies the sensing signal in response to a second excitation. The sensing arrangement comprises a corresponding signal generator that determines whether the at last one component is or has been influenced by the second excitation and generates a second signal accordingly, so that a reliability of the processed sensing signal can be assessed.

Embodiments are at least partly based on the realization that processing circuits for sensing circuits (for a particular excitation) can introduce unwanted noise due to other excitations. An investigation shows it is because this noise is introduced because of a change, due to the other excitations, of inherent electrical characteristic of a component in the processing circuit. To account for this unwanted noise, a sensing arrangement can be provided with a signal generator that generates a signal indicative of this unwanted change. This signal and the output of processing circuit can be used together to determine whether the output of a processing circuit for a sensing circuit is reliable, i.e. has not been influenced by unwanted noise caused by other excitations or unreliable, i.e. has been influenced by such unwanted noise.

Illustrative embodiments may, for example, be employed in lighting systems comprising one or more luminaires that are triggered based on a processed control signal, such as a motion-sensitive lighting system. Embodiments avoid false triggering of the one or more luminaires due to an undesired excitation.

In the following description, an excitation is considered an excitation emanating from a source external to the sensing arrangement. Thus, the term "external excitation" refers to any external influence on the sensing arrangement that could be detected by a suitably designed sensing circuit, such as an electromagnetic wave or a movement/vibration. The external excitation is preferably a non-contact excitation (i.e. there is no entity directly interacting with the sensing arrangement to provide the external excitation).

Preferably, the "first external excitation" is an electromagnetic wave, e.g. a microwave signal, and the "second external excitation" is a movement/vibration of the sensing arrangement, e.g. caused by a nearby fan or oscillator. In the proposed embodiments, the second external excitation is different to the first external excitation.

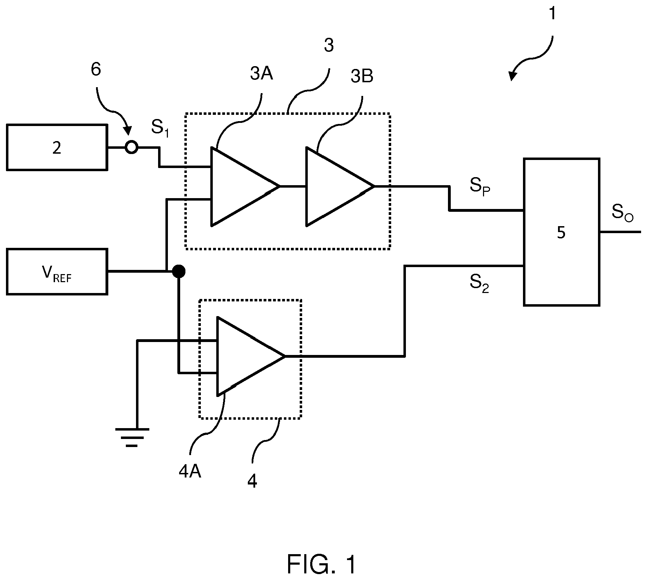

Figure 1 illustrates a block diagram of a sensing arrangement 1 according to a first embodiment of the invention. The sensing arrangement 1 comprises a sensing circuit 2, a processing circuit 3, a signal generator 4 and a signal analyzer 5. In this first embodiment, the processing circuit 3 and the signal generator 4 are distinct and separate from one another.

The sensing circuit 2 is adapted to sense a first external excitation and generate a sensing signal $S_1$ responsive to the first external excitation. Thus, the sensing signal $S_1$ represents a sensed first external excitation. Thus, the sensing circuit is designed to detect a first external excitation, such as an electromagnetic wave, and generate a sensing signal indicating at least a presence or absence of the first external excitation.

In the microwave sensing field, the sensing circuit may be an off-the-shelf component with a microwave transceiver and a detector to detect the phase shift between the transmitted signal and the received (reflected) signal. Therefore, the sensing circuit may be combined within the sensing arrangement itself, or alternatively separated from the sensing arrangement which may still have an interface 6 adapted to receive the sensing signal from the sensing circuit.

Thus, there may be a sensing arrangement comprising an interface 6 for connecting to a sensing circuit 2 (which is not formed as part of the sensing arrangement) and receiving a sensing signal therefrom. Embodiments do not therefore need to comprise the sensing circuit.

The processing circuit 3 is adapted to process the sensing signal $S_S$, thereby generating a processed sensing signal $S_P$. The processing performed by the processing circuit may comprise a filtering and/or amplification step.

The illustrated processing circuit 3 comprises two amplifiers 3A, 3B, adapted to amplify the sensed signal $S_1$ to output the processed sensed signal $S_P$. Here, a first amplifier 3A amplifies a difference between the sensing signal $S_1$ and a reference voltage $V_{REF}$, and a second amplifier 3B amplifies the output of the first amplifier 3A. Each amplifier may act as a sub-processing unit. Other examples of a processing circuit may comprise a combination of one or more filters, amplifiers or switches.

The processing circuit 3 comprises at least one component that can change its inherent electrical characteristic and can modify the processed sensing signal in response to a second, interfering external excitation. Put another way, during a processing of the sensing signal $S_1$, the at least one component of the processing circuit can add/introduce unwanted noise or error to the sensing signal due to a second external excitation. The second external excitation therefore interferes with the processing of the sensing signal $S_1$ and introduces error in the processed sensing signal, via the at least one component of the processing circuit 3.

By way of example, the at least one component of the processing circuit may modify the sensing signal or an intermediate sensing signal (being a partially processed signal) in response to the second external excitation. Thus, the modification occurs between an input to the processing circuit and an output of the processing circuit.

The second external excitation is not an excitation that the sensing circuit 2 is designed to sense and is therefore unwanted. In examples, the second external excitation is caused by a vibration incident on the sensing arrangement 1 from a local environment (e.g. a nearby oscillator or fan).

The signal generator 4 is adapted to determine whether the at least one component is influenced by the second external excitation. This may be implemented by directly sensing the second external excitation, and generating a second signal $S_2$ in response to the second external excitation. The second signal $S_2$ is not modified by the first external excitation (or any such modification is negligible). Thus, the signal generator senses the same external excitation that adds unwanted noise/error during a processing of the sensing signal.

Preferably, the signal generator 4 comprises an amplifier 4A, adapted to amplify a difference between a ground voltage and a reference voltage. The amplifier 4A corresponds to one of the first 3A or second 3B amplifiers of the processing circuit. More specially, the amplifier 4A has a component that changes its inherent electrical characteristics, in the same or similar manner as the concerned component in the amplifier 3A or 3B. In this way, the signal generator modifies the input to the signal generator 4 in a same way as one of the sub-processing units (here: amplifiers) of the processing circuit 3. Thus, the second signal $S_2$ is responsive to a second external excitation in same way as an output of a sub-processing unit (and thereby the processed sensing signal $S_P$) of the processing circuit 3 is responsive to the second external excitation.

The signal analyzer 5 is adapted to receive the processed sensing signal $S_P$ and the second signal $S_2$ as inputs. The signal analyzer 5 analyses the processed sensing signal $S_P$ using the second signal $(S_2)$ to identify whether the processed sensing signal has been modified by the at least one component, due to the second external excitation, and thereby rendered unreliable.

By way of example, the signal analyzer 5 may compare characteristics of the processed sensing signal $S_P$ and the second signal $S_2$ to determine whether the processed sensor signal $S_P$ has been modified by the second external excitation. Characteristics for comparison may include a frequency; amplitude; distribution; spectrum or temporal pattern. A signal distribution may indicate how many times a signal exceeds a predetermined threshold within a set time period. Those skilled in the art would understand that any recognition or matching method can be used for analyzing a similarity between the two signals, and it is not necessary to provide further details on this aspect. In alternative embodiments, no cross-reference between the two signals (processing sensing signal and second signal) is needed: for example, as long as the second signal itself satisfies a certain or predetermined condition/criterion, the processed sensing signal is determined as invalid.

The signal analyzer 5 can determine whether a processed sensing signal $S_P$ has been modified due to, or otherwise affected by, the second external excitation. In particular, the signal analyzer can use the second signal $S_2$ as an indicator of whether a second external excitation has occurred, and compare this indication to the processed sensing signal $S_P$.

Thus, the signal analyzer can distinguish/determine whether an indication in the processed sensing signal is indicative of the first external excitation or whether it is false indication, caused by the second external excitation.

The second signal $S_2$ can therefore act as a warning signal, indicating that an undesirable second external excitation may have affected the processing of the sensing signal $S_1$, such that the processed sensing signal is erroneous. In doing so, the signal analyzer 5 may determine a correlation between the processed sensing signal $S_P$ and the second signal $S_2$, to determine whether the processed sensing signal has been modified by the second external excitation.

The signal analyzer 5 may provide an output signal $S_O$ indicative of whether a first external excitation has been correctly detected.

In particular, the signal analyzer 5 may output a signal indicating whether the processed sensing signal exceeds a predetermined threshold, indicating a sensing of the first external excitation - a "positive indication". The signal analyzer 5 may only be adapted to only provide a positive indication if it is determined that the processed sensing signal is reliable (i.e. has not been affected by the second external excitation). Thus, the output signal $S_O$ will not indicate that a first external excitation has been detected if the processed sensing signal $S_P$ exceeds a predetermined threshold, but it is determined that the processed sensing signal Sp is unreliable due to interference by the second external excitation.

In this way, the output signal $S_O$ is a reliable indicator of detection of the first external excitation, and helps prevent mis-trigger (e.g. in an external device) due to the second external excitation. The proposed embodiments therefore provide a sensing arrangement 1, for detecting a first external excitation, with a self-correcting or self-filtering functionality.

In other examples, the signal analyzer 5 may be adapted to output the processed sensing signal $S_P$ as the output signal $S_O$, but only when it has determined that the processed sensor signal has not been affected by the second external excitation (e.g. it is a true reading). Thus, the signal analyzer 5 may not provide an output signal $S_O$ if it is identified that the processed sensor signal $S_P$ has been affected by the second external excitation.

In other examples, the signal analyzer is adapted to remove noise from the processed sensor signal based on the second signal $S_2$, and output the noise-removed sensor signal as the output signal $S_O$. By way of example, the signal analyzer 5 may attenuate frequencies of the processed sensor signal $S_P$ that are identified in the second signal $S_2$. In another example, the signal analyzer 5 may subtract the second signal $S_2$ from the processed sensor signal, optionally with a certain weighting factor applied to the second signal, to mitigate the effect of the second external excitation. In this way, the detection is more accurate in the case that both first and second external excitations happen.

Thus, the second signal $S_2$ may act as a compensatory signal, wherein information contained in the second signal is used to compensate for the second external excitation in the processed sensing signal, e.g. to attenuate variations or patterns attributed to the second external excitation.

In other examples, the signal analyzer is adapted to generate, as the output signal $S_O$, an indicator of whether the processed sensor signal $S_P$ has been modified by the second external excitation. This may be provided to another circuit (e.g. along with the processed sensor signal $S_P$) for further processing.

The signal analyzer 5 may comprise a microcontroller or MCU for analyzing the processed sensing signal using the second signal.

The sensing circuit 2 may be adapted to sense an electromagnetic signal, e.g. a microwave signal, that acts as the first external excitation. A microwave signal is considered to be any electromagnetic signal having a frequency of between 300 MHz and 300 GHz or a wavelength of from 0.001m to 1m.

In preferable embodiments, the sensing circuit 2 is adapted to detect an electromagnetic signal that has undergone a Doppler shift due to contact with a moving entity. In an example, the sensing arrangement 1 emits a microwave signal, which changes frequency when contacting a moving entity due to the Doppler effect. This reflected signal (having undergone a Doppler shift) is then detected by the sensing circuit 2. The sensing arrangement may, in embodiments, comprise a signal emitter adapted to emit an electromagnetic signal, e.g. a microwave signal, and a corresponding signal receiver formed as a part of the sensing circuit.

The sensing circuit 2 may be designed to emit a sensing signal $S_1$ responsive to the frequency shift of the electromagnetic signal. Thus, the first external excitation may be a frequency shift of an electromagnetic signal.

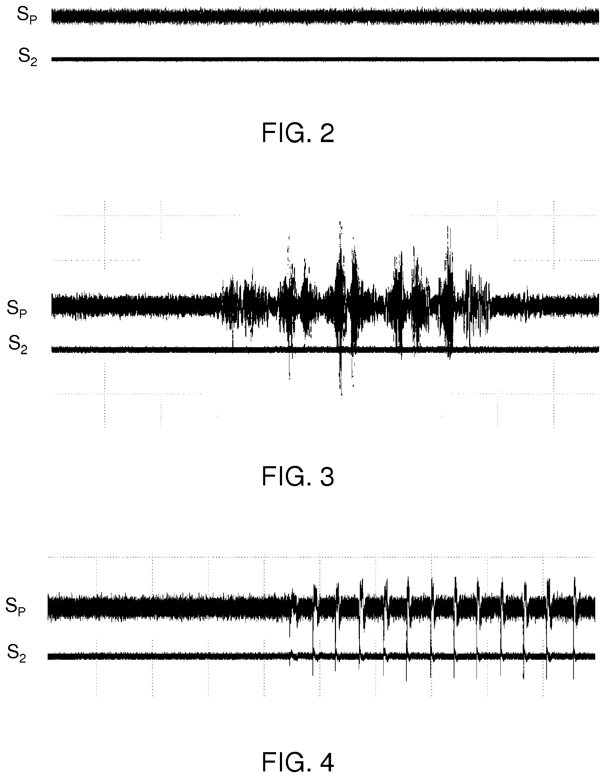

Figures 2 to 4 are waveform diagrams of the processed sensing signal $S_P$ and the second signal $S_2$, which are input to the signal analyzer, in different scenarios.

In a first scenario, illustrated by Figure 2, neither the first nor the second external excitations act on the sensing arrangement. As such, both the processed sensing signal $S_P$ and the second signal $S_2$ only exhibit background noise characteristics. It will be appreciated that for each signal, movement deviating from these background noise characteristics is indicative of an influence of an external excitation on the signal.

In a second scenario, illustrated by Figure 3, there is only a first external excitation (and no second, interfering external excitation) acting on the sensing arrangement. The processed sensing signal $S_P$, responsive to both a first and second external excitation, is therefore modified in response to the first external excitation. The second signal $S_2$, not responsive to the first external excitation, remains unmodified, and only exhibits background noise characteristics.

A signal analyzer may compare the two signals $S_P$, $S_2$ and determine that, as there is no correlation between the two signals, the processed sensing signal has not been modified by the second external excitation. As such, the signal analyzer can determine that the processed sensing signal is reliable.

Alternatively, the signal analyzer may analyze the second signal $S_2$ alone to determine whether there is any active signal on it (excluding noise). In response to determining that there is no active signal on the signal $S_2$, except for noise, as illustrated in Figure 3, the signal analyzer can determine that the processed sensing signal $S_P$ is reliable.

In a third scenario, illustrated by Figure 4, there is only a second external excitation (and no first, desired external excitation).

The processed sensing signal $S_P$ is modified due to this second external excitation (due to one or more components of the processing circuit). The second signal $S_2$ is also modified due to the second external excitation (by design).

A signal analyzer may compare the two signals $S_P$, $S_2$ and determine that, as there is a correlation between the signals, the processed sensing signal $S_P$ has been modified by the second external excitation (rather than the first external excitation), and is therefore rendered unreliable.

In particular, in the third scenario, a pattern or frequency of the processed sensing signal $S_P$ and second signal correspond to one another. Thus, a comparison of characteristics of the processed sensing signal $S_P$ and the second

signal $S_1$ can be made to determine whether the processed sensing signal $S_P$ is reliable.

Alternatively, the signal analyzer may analyze the signal $S_2$ alone and find there is an active signal on it (that cannot be attributed to noise alone), indicating that there has been a second external excitation acting on the processing circuit. As such, the signal analyzer can determine that the processed sensing signal is unreliable. The analysis may be in the time domain or in the frequency domain according to various methods.

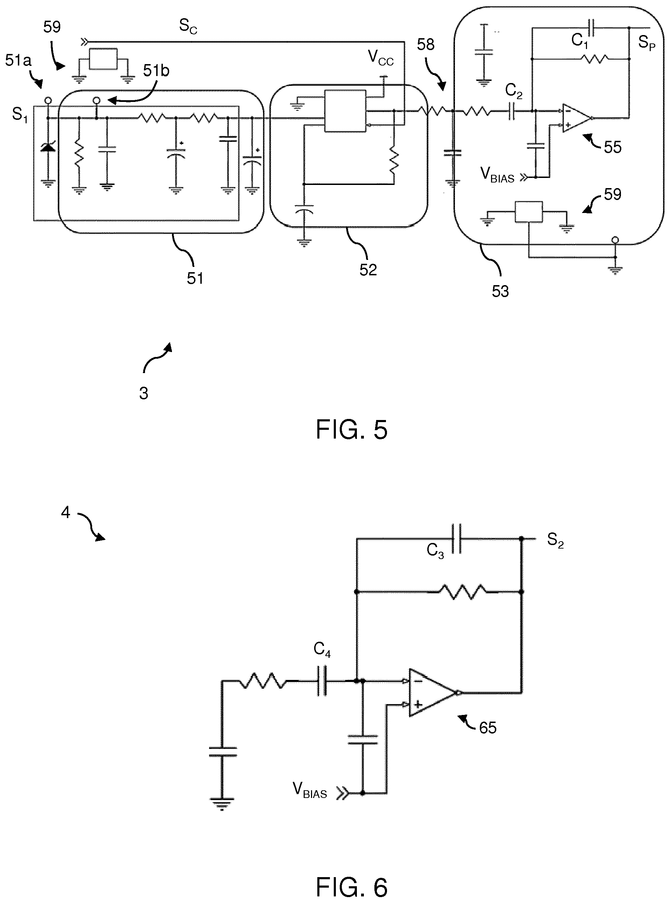

Figure 5 is a circuit diagram of a processing circuit 3 for a sensing arrangement according to the first embodiment.

The processing circuit 3 comprises three sub-processing units 51, 52, 53. Each sub-processing unit is adapted to process the sensing signal. The sub-processing units are connected in a cascading arrangement, such that the output of the first sub-processing unit 51 is connected as an input to the second sub-processing unit 52 and so on. The processing circuit 3 may therefore be considered to comprise a respective intermediate sensing signal (being partially processed sensing signals) between each sub-processing unit.

The input of the processing circuit 3 (i.e. the input of the first sub-processing unit 51) is the sensing signal $S_1$. The output of the processing circuit 3 (i.e. the output of the third sub-processing unit 53) is the processed sensing signal $S_P$.

A first sub-processing unit 51 is a filtering circuit. The filtering circuit 51 comprises a plurality of components, such as resistors, (polarized) capacitors, diodes, Zener diodes and so on. The filtering circuit performs a filtering step on the sensing signal, according to known principles. The filtering circuit may receive the sensing signal $S_1$ at either or both of nodes 51a, 52b of the first-sub-processing unit, and preferably at node 51a.

A second sub-processing unit 52 is a signal selection circuit. The signal selection circuit 52 is adapted to control an output signal in response to a control signal Sc. By way of example, a signal may only be output by the signal selection circuit 52 when the control signal Sc is high. The signal selection circuit 52 may comprise a time sequence control, such as a flip-flop arrangement, for improved control over the output signal.

A third sub-processing unit 53 is an amplifying circuit. The amplifying circuit 53 amplifies a signal received at its input. Here, the amplifying circuit 53 comprises at least a first operational amplifier 55. The illustrated first operational amplifier 55 is a differential amplifier, a first input of which receives the input of the third sub-processing unit and a second input of which receives a bias voltage $V_{BIAS}$, which may be a constant voltage (e.g. a voltage supply).

The processing circuit may comprise other components, such as an additional filter 58. The processing circuit 3 further comprises ground units 59, adapted to provide an electronic ground for components of the processing circuit 3.

One or more of the three sub-processing units comprises at least one component that changes its inherent electrical characteristics and modifies the sensing signal (or an intermediate sensing signal), during processing of the sensing signal, in response to a second, external excitation. Thus, during processing of the sensing signal representative of the first external excitation, one or more components of a processing circuit modify the sensing signal in response to a second external excitation. This modification adds unwanted noise or false variation to the processed sensing signal.

Thus, the processing circuit comprises at least one component that modifies the processed sensing signal in response to a second, interfering external exciting.

Preferably, the at least one component comprises a capacitor.

In other words, the at least one component that changes its inherent electrical characteristics may comprise the capacitor. It has been recognized that a piezoelectric effect of a (ceramic) capacitor results in a change in the capacitance due to a vibration, thereby making a processing circuit comprising the capacitor change its response or factor: like amplification factor. As such, the processing circuit, due to the capacitor, becomes sensitive to vibration (caused by external noise or an external oscillator), thus causing undesirable variations in the processed sensing signal that may be treated (by an unknowing circuit) as indicative of the first external excitation. In particular, a vibration of a capacitor causes, due to a piezoelectric effect, an unwanted variation in a signal processed using a processing circuit comprising such a capacitor.

This could lead to false operation of a system responsive to the sensing arrangement, due to the errors (in particular, false positives) introduced into the processed sensing signal by the second external excitation.

The present invention innovatively recognizes that these errors are introduced during processing of the sensing signal (i.e. not during detection itself), and in particular, that these errors can be introduced by the piezoelectric effect of a capacitor of a processing circuit of a sensing arrangement.

In the illustrated example, the third sub-processing unit 53, the amplifying circuit, comprises a first capacitor $C_1$ and a second capacitor $C_2$ that each modify the sensing circuit in response to a second external excitation. One or more of these capacitors may be omitted in other embodiments. For the amplifying circuit 53, it has been recognized that the first and second capacitors introduce the most error into the processed sensing signal due to the second external excitation.

The first capacitor $C_1$ is connected between an output of the first operational amplifier 55 of the amplifying circuit 53 and an input to the first operational amplifier 55, and thereby acts as a feedback capacitor. The second capacitor $C_2$ is connected between an input to the amplifying circuit 53 and the input of the first operational amplifier 55, and thereby acts as a coupling capacitor for blocking DC, also known as a blocking capacitor.

The effect of a capacitor on a processed sensing signal can be calculated using the transfer function between

the sensing signal $S_1$ and the processed sensing signal $S_P$. Using well known principles, a transfer function H(s) can be modelled as:

$$H(s) = \frac{S_P(s)}{S_1(s)} \qquad (1)$$

where $S_P(s)$ is a Laplace transportation of a time-dependent processed sensing signal $S_P(t)$ and $S_1(s)$ is a Laplace transportation of a time-dependent sensing signal $S_1(t)$.

If a capacitance of a capacitor (that introduces error due to a second external excitation) is a value found in a denominator of the transfer function H(s), than a decreasing capacitance provides greater error in the processed sensing signal $S_P$ due to the second external excitation.

If a capacitance of a capacitor (that introduces error due to a second external excitation) is a value found in a numerator of the transfer function H(s), than an increasing capacitance provides greater error in the processed sensing signal $S_P$ due to the second external excitation.

Following this understanding, it will be clear that the smaller the capacitance of the first capacitor $C_1$ is, the greater the error in the processed sensing signal introduced by the second external excitation (e.g. vibration) via the first capacitor $C_1$. Similarly, the greater the capacitance of the second capacitor $C_2$, the greater the error introduced into the processed sensing signal by the second external excitation (e.g. vibration) via the second capacitor $C_2$.

The third sub-processing unit 53, the amplifying circuit, may comprise other components, such as resistors, coupling capacitors or stabilizing capacitors. Amongst other things, these other components may be used to bias an input for the first operational amplifier 55, to filter an input for the first operational amplifier, improve a stability of the amplifying circuit or to control an amplification of the amplifying circuit (e.g. by acting in a feedback loop).

In other examples, the at least one component that modifies the sensing signal, in response to the second external excitation, is found in other sub-processing units, e.g. the filtering circuit 51. By way of example, a component that may modify the sensing signal may be a capacitor of the filtering circuit 51.

The at least one component that modifies the sensing signal, in response to the second external excitation, does not need to be a capacitor. For example, a resistor may be responsive to varying levels of light or infra-red radiation from an external source incident thereon, and modify the sensing signal in response to such sources.

The processing circuit 3 may comprise additional sub-processing units, such as an additional amplifying circuit.

Figure 6 is a circuit diagram of a signal generator 4 for the sensing arrangement 3 according to the first embodiment. The signal generator 4 is designed for the processing circuit 3 illustrated in Figure 5.

The signal generator 4 has the same topology as the third sub-processing unit 53, the amplifying circuit, illustrated in Figure 5. In other words, the signal generator comprises a sub-processing unit corresponding to the third sub-processing unit 53 (a "corresponding sub-processing unit"), having a same topology. An output of the signal generator 4 is the second signal $S_2$.

Thus, the signal generator 4 has a corresponding sub-processing unit comprising components that are of a type identical to the at least one component, of the (third) sub-processing unit, that modifies the sensed signal in response to the second external excitation.

Rather than receiving a sensing signal (or partially processed sensing signal) as input, the signal generator may receive a constant voltage (e.g. ground or $V_{CC}$) as an input. This constant voltage is modified by the signal generator, in response to the second external excitation, in a same manner as the sensing signal (or partially processed sensing signal) by the corresponding sub-processing unit of the processing circuit.

As the topology of the corresponding sub-processing unit is identical to that of the sub-processing unit of the processing circuit (that introduces error due to the second external excitation), the signal forming the second signal $S_2$ is modified by the second external excitation in a same manner/fashion as the processed sensing signal.

Thus, the second signal $S_2$ accurately models or modulates an error introduced in the processed sensing signal by the second external excitation. This increases a likelihood and accuracy of detecting errors in the processed sensing signal using the second signal $S_2$, as the second signal $S_2$ corresponds to the error induced in the processed sensing signal by the second external excitation.

Moreover, using a same topology for the signal generator approximates the output of the processing circuit with high accuracy. Alternatively the signal generator may have a simpler topology such that a manufacturing process is also made simpler. Alternatively, the signal generator may be more complex than the processing circuit, for improved accuracy.

Thus, there is provided an accurate method of detecting errors in a sensing arrangement due to a second external excitation interfering with a processing of a sensing signal. In this way, embodiments provide a high performance sensing arrangement capable of self-determining when errors have been introduced during processing of a sensing signal.

The topology of the signal generator 4 depends upon the topology of the processing circuit 3, and in particular, the topology of at least one sub-processing circuit of the processing circuit that comprises at least one component that changes its inherent electrical characteristics and modifies the processed sensing signal in response to a second, interfering external excitation.

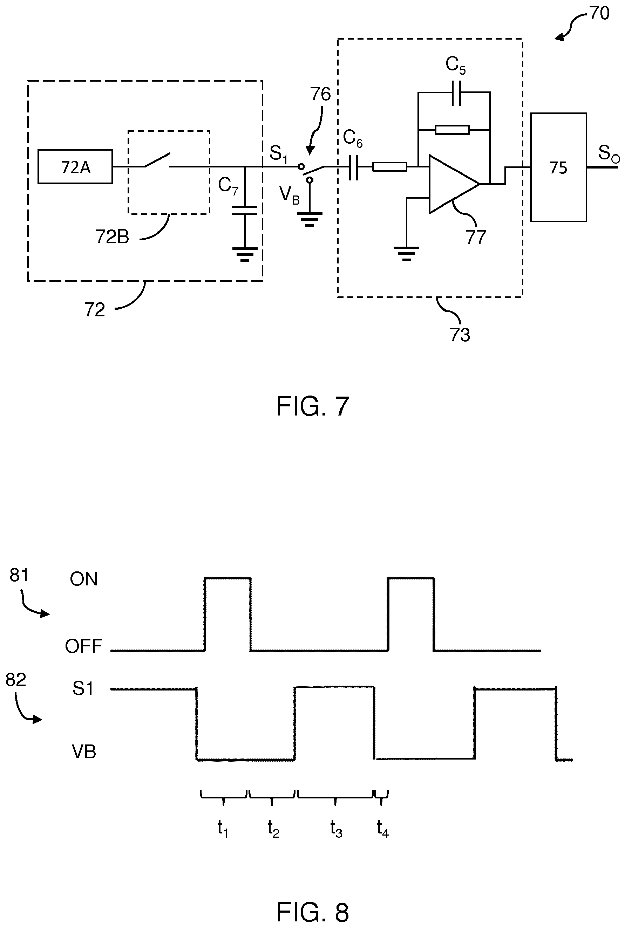

In the embodiment of Figures 1, 5 or 6, the processing circuit and the signal generator are illustrated as two separate circuit portions of the sensing arrangement. Alternatively, they could be implemented by a same circuit. Figure 7 illustrates a block diagram of a sensing arrangement 70 according to a second embodiment of the invention. As before, the sensing arrangement 70 comprises a sensing circuit 72, a processing circuit 73 and a signal analyzer 75.

In the second embodiment, the sensing arrangement 70 further comprises a switching unit 76 adapted to switch an input of the processing circuit 73 between an output of the sensing circuit 72 (i.e. the sensing signal) and a bias voltage $V_B$ (e.g. ground or a constant voltage).

When connected to the output of the sensing circuit 2, the processing circuit acts as the processing circuit of the first embodiment, and generates the processed sensing signal. When connected to the bias voltage $V_B$, the processing circuit acts as the signal generator of the first embodiment, and generates the second signal $S_2$.

In particular, the processing circuit 73 performs a same processing on the bias voltage $V_B$ as it does on the sensing signal $S_1$. Thus, any errors introduced by (one or more components) of the processing circuit 73 during processing of the sensing signal $S_1$, due a second external excitation, are replicated during the processing of the bias voltage.

Thus, the switching unit 76 adjusts an effective operation of the processing circuit, so that the processing circuit can act as both a processing circuit (for the sensing signal $S_1$) and a signal generator.

The signal analyzer 75 comprises a same input, connected to the processing circuit 73, for receiving both the processed sensing signal and the second signal.

The signal analyzer is adapted to distinguish between the processed sensing signal and the second signal received at its input, e.g. using a signal selector. This distinguishing step may be performed by ascertaining the switching state of the switching unit 76, to determine whether a currently received signal is the processed sensing signal or the second signal.

As before, the signal analyzer uses the second signal $S_2$ to analyze the processed sensing signal to determine/identify whether the processed sensing signal has been modified by the at least one component (of the processing circuit 73) due to the second external excitation. The comparison may be performed in a similar fashion to the signal analyzer of the first embodiment.

By using the same processing circuit to generate both the processed sensing signal and the second signal, a number of components of the sensing arrangement can be reduced. This reduces a cost and size of the overall sensing arrangement.

The switching unit 76 may be adapted to alternate the input of the processing circuit 73 between the sensing signal and the bias voltage. In this way, the output of the processing circuit 73 may be analogous to a time-divided multiplex signal. The alternation of the input is preferably periodic, for consistency and ease of operation.

In preferable embodiments, the switching unit alternates the input of the processing circuit between the sensing signal and the bias voltage at a frequency of no less than 500Hz (e.g. no less than 1kHz) and/or no more than 10kHz (e.g. no more than 5kHz). The switching frequency may depend upon an operation of the sensing circuit. By way of example, if the sensing circuit 72 operates on a pulse basis, e.g. senses reflections of pulses of an electromagnetic wave, the switching frequency of the switching unit 76 may be no less than the pulse frequency for the sensing circuit 72. It will be well understood that the pulse frequency is the frequency at which pulses of an electromagnetic wave are transmitted (e.g. by a signal emitter), reflections of which are detected by the sensing circuit.

In the illustrated embodiment, the processing circuit 73 comprises an amplifying arrangement. In particular, the processing circuit comprises a first operational amplifier 77, adapted to amplify the sensing signal $S_1$ or the bias voltage $V_B$ (depending upon the switching state of the switching unit 76).

The processing circuit 73 further comprises at least one capacitor $C_5$, $C_6$, being the component(s) that modifies the sensing signal or the bias voltage in response to a second, interfering external excitation.

In particular, there is a first capacitor $C_5$ connected between an output of the first operational amplifier 77 of the amplifying circuit 73 and an input to the first operational amplifier 77, and thereby acts as a feedback capacitor. A second capacitor $C_6$ is connected between an input to the amplifying circuit 73 and the input of the first operational amplifier 77, and thereby acts as a coupling capacitor.

To reduce a power loss and loss of sensitivity caused by using the same processing circuit for both signals, the sensing circuit may comprise a sensing switch 72B and a storage capacitor $C_7$. A first plate of the storage capacitor $C_7$ is coupled to the sensing switch and provides the output of the sensing circuit, i.e. the sensing signal $S_1$, to the processing circuit 73 via the switching unit 76. A second, opposing plate of the storage capacitor is coupled to a reference voltage, e.g. ground.

The sensing switch 72A selectively couples an output of a sensing unit 72A, adapted to generate a preliminary sensing signal responsive to the first external excitations, to the first plate of the storage capacitor $C_7$. When coupled to

the first plate, the sensing unit 72A charges the first plate, the amount of charge being responsive to a first external excitation.

When the switching circuit 76 couples the input of the processing circuit to the output of the sensing circuit 72, the charge on the first plate of the storage capacitor $C_7$ is provided as the sensing signal $S_1$. Thus, the output of the sensing circuit 72 (the sensing signal $S_1$) may be the charge/voltage on the first plate of the storage capacitor $C_7$.

The sensing switch 72B may be controlled so that it couples the output of the sensing unit 72A to the first plate of the storage capacitor $C_7$ only when the switching unit connects the input of the processing circuit 73 to the bias voltage $V_B$.

Thus, the operation of the sensing switch 72B and the switching unit 76 may be synchronized to improve the sensitivity of the sensing arrangement and reduce a power loss.

In embodiments, the sensing arrangement may comprise a controller (not shown) adapted to control the switching unit 76 and the sensing switch 72B (if present). The controller may be formed as a module or aspect of a microcontroller, which can also act as the signal analyzer 75. This allows the signal analyzer to control the state of the switching unit, and thereby control whether it receives the processed sensing signal or the second signal.

Figure 8 illustrates waveforms for synchronously controlling the sensing switch 72B and the switching unit 76.

A first waveform 81 illustrates a control signal for the sensing switch 72B. A high state ON indicates that the sensing unit 72B is closed, and the sensing unit 72A is connected to the storage capacitor $C_7$. A low state OFF indicates that the sensing unit 72A is open, and the sensing unit is disconnected from the storage capacitor $C_7$.

A second waveform 82 illustrates a control signal for the switching unit 76. A high state indicates that the switching unit 76 connects the output S1 of the sensing circuit 72 to the input of the processing circuit 73. A low state indicates that the switching unit connects the bias voltage $V_B$ to the input of the processing circuit 73, so that the processing circuit acts as the signal generator.

In a first time period $t_1$ and second, subsequent time period $t_2$, the input of the processing circuit 73 is connected to the bias voltage $V_B$. Thus, the processing circuit 73 acts as a signal generator, and generates a second signal responsive to the second external excitation.

In the first time period $t_1$, the storage capacitor $C_7$ is charged by the sensing unit 72A, the charge being responsive to the first external excitation. In the second time period $t_2$, the storage capacitor is disconnected from the sensing unit and is in a floating state (i.e. the charge has negligible change).

In a third time period $t_3$, subsequent to the second time period $t_2$, the input of the processing circuit 73 is connected to the output of the sensing circuit 72, rather than the bias voltage $V_B$. The processing circuit 73 processes the sensing signal $S_1$ received from the sensing circuit to generate the processed sensing signal. Thus, in the third time period, the processing circuit acts as the processing circuit of the first embodiment and generates the processed sensing signal for the signal analyzer.

The first, second and third time periods may be iteratively repeated. In some embodiments, there is a fourth time period $t_4$ or delay between the end of the third time period $t_3$ and the repetition of the first time period $t_1$. This fourth time period $t_4$ acts as a guard between different samples, and can be of any length of time, as would be appreciated by the skilled person.

In this way, the processed sensing signal corresponds to sensing data gathered/filtered during a time period in which the second signal is generated. Thus, by charging the storage capacitor (i.e. performing sensing of the first external excitation) during the period in which the second signal is generated, the sampling time can be saved.

This also allows for a filtering of the sensing signal $S_1$ to be performed during generation of the second signal (e.g. by the sensing unit 72A or the capacitor $C_7$), thereby saving time that may otherwise be used to wait for a filtering step to be performed.

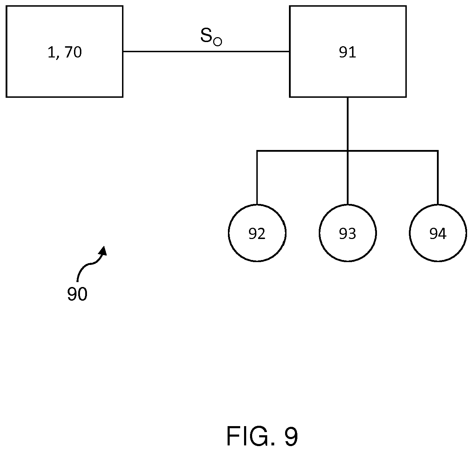

Figure 9 illustrates a lighting system 90 according to an embodiment of the invention. The lighting system 90 comprises a sensing arrangement 1, 70, such as those previously described, a control system 91 and a plurality of luminaires 92, 93, 94.

The control system 91 receives the output signal $S_O$ from the sensing arrangement. The output signal $S_O$ is indicative of whether a first external excitation has been detected.

As previously explained, the output signal $S_O$ is responsive to the analysis of the processed sensing signal, which identifies whether the processed signal has been affected or not by the second external excitation. Thus, the output signal $S_O$ is based on the processed sensing signal and the analysis of the processed sensing signal.

The control system 91 controls an operation of the plurality of luminaires based on the output signal. By way of example, if the output signal indicates that a first external excitation has been detected, it may switch the luminaires on (i.e. so they output light) for a predetermined period of time. If the luminaires are already in an on-state, the control system 91 may reset the period of time for which the luminaires are maintained in an on-state.

Thus, the control system 91 may keep the luminaires in an on-state for a predetermined period of time after the last detection of the first external excitation. Thus, if there is no indication of the first external excitation for a predetermined period of time, the control system may switch the luminaires 92, 93, 94 to an off-state. Thus, the output signal

$S_O$ triggers the luminaire(s).

The control system 91 may control the operation of the plurality of luminaires 92, 93, 94 by selectively providing a power to the luminaires. Alternatively, the control system may be adapted to provide instructions to the luminaires, e.g. using a wired or wireless communication channel, to control their operation. The luminaires may, for example, comprise a smart bulb for receiving and processing such communication(s).

The first external excitation, via the output signal $S_O$, may thereby act as a trigger for the luminaire(s) 92, 93, 94.

Thus, the control system controls the plurality of luminaries based on the processed sensing signal if the analysis of the processed sensing signal identifies the processed sensing signal as not being modified by the second external excitation.

The plurality of luminaires 92, 93, 94 may be replaced, for example, by a single luminaire. Thus, the lighting system may comprise at least one luminaire, rather than the plurality of luminaires.

Preferably, the sensing arrangement 1, 70 is adapted for motion sensing, so that the processed sensed signal, and thereby the output signal $S_O$, indicates a presence of a moving object proximate to the sensing arrangement; and the control system is adapted to trigger the at least one luminaire based on the processed sensed signal.

Alternatively, the control system 91 may be integrated in each luminaire and control that luminaire alone.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. For example, the above embodiments describe the invention in an application of microwave motion sensing against the interference from movement/vibration of the sensing arrangement. Those skilled in the art understand that other type of sensing and other type of interference could also be applicable. The mere fact that certain measures are recited in mutually different dependent claims does not indicate that a combination of these measures cannot be used to advantage. Any reference signs in the claims should not be construed as limiting the scope.

**Claims**

1. A sensing arrangement (1, 70), comprising:

   an interface (6) adapted to:

   connect to a sensing circuit (2, 72) adapted to sense a first excitation; and
   receive a sensing signal ($S_1$), generated by the sensing circuit (2, 72), responsive to the first excitation;

   a processing circuit (3, 73) adapted to process the sensing signal ($S_1$) to thereby generate a processed sensing signal ($S_P$), wherein the processing circuit comprises at least one component (3A) that is able to change its inherent electrical characteristic and modify the sensing signal responsive to a second, interfering excitation;
   a signal generator (4, 73) adapted to determine whether the at least one component has been influenced by the second excitation and generate a second signal ($S_2$) accordingly; and
   a signal analyzer (5, 75) adapted to:

   receive the processed sensing signal ($S_P$) and the second signal ($S_2$); and
   analyze the processed sensing signal using the second signal ($S_2$) to identify whether the processed sensing signal has been modified by the at least one component due to the second excitation and thereby rendered unreliable.

2. The sensing arrangement of claim 1, further comprising the sensing circuit (2, 72), wherein the sensing circuit is adapted to sense a frequency shift of a received electromagnetic signal with respect to a transmitted electromagnetic signal as the first excitation, wherein the frequency shift is due to Doppler effect and preferably wherein the electromagnetic signal is a microwave signal, and
   the signal generator (4, 73) comprises:

   a corresponding at least one component of the same type as the at least one component of the processing circuit, the corresponding at least one component being adapted to modify the second signal responsive to said second interfering excitation; or
   a detection device adapted to couple to the at least one component and measure a change in the electrical characteristic of the at least one component.

3. The sensing arrangement of any of claims 1 or 2, wherein the least one component that modifies the sensing signal comprises at least one capacitor ($C_1$, $C_2$), and the second interfering excitation comprises a movement of the at least one capacitor that influences the capacitance of the at least one capacitor due to piezoelectric effects.

4. The sensing arrangement of any of claims 1 to 3, wherein:

the processing circuit (3) comprises a sub-processing unit (51, 52, 53) adapted to process the sensing signal; and
the signal generator (4) comprises a corresponding sub-processing unit having the same topology as the sub-processing unit, thereby having components of a type identical to that of the at least one component of the sub-processing unit.

5. The sensing arrangement of claim 4, wherein the sub-processing unit (53) comprises an amplifying circuit, and the corresponding sub-processing unit (4) comprises a corresponding amplifying circuit.

6. The sensing arrangement of claim 5, wherein:

the sub-processing unit (53) comprises a first operational amplifier (55) adapted to output an amplified sensing signal ($S_P$), with at least one capacitor ($C_1$, $C_2$) that modifies the amplified sensing signal ($S_P$) in response to the second excitation; and
the corresponding sub-processing unit (4) comprises a second operational amplifier (65) with at least one capacitor ($C_3$, $C_4$) that modifies an output of the second operational amplifier ($S_2$) in response to the second excitation, said modified output of the second operational amplifier forming the second signal.

7. The sensing arrangement of claim 6, wherein:

at least one capacitor ($C_1$) of the sub-processing unit (53) is connected between an output of the first operational amplifier (55) of the sub-processing unit and an input of the first operational amplifier of the sub-processing unit;
at least one capacitor ($C_3$) of the corresponding sub-processing unit (4) is connected between an output of the second operational amplifier (65) of the corresponding sub-processing unit and an input of the second operational amplifier of the corresponding sub-processing unit.

8. The sensing arrangement of claim 6 or 7, wherein:

at least one capacitor ($C_2$) of the sub-processing unit is connected between an input to the sub-processing unit (53) and an input to the first operational amplifier (55) of the sub-processing unit; and
at least one capacitor ($C_4$) of the corresponding sub-processing unit is connected between an input to the corresponding sub-processing unit and an input to the second operational amplifier (65) of the corresponding sub-processing unit

9. The sensing arrangement of any of claims 4 to 8, wherein the sub-processing unit (51) comprises a filtering circuit, and the corresponding sub-processing unit comprises a corresponding filtering circuit.

10. The sensing arrangement of any of claims 1 to 9, wherein the processing circuit (3) and the signal generator (4) are distinct and separate from one another and the signal analyzer (5) comprises two inputs respectively coupled to the processing circuit and the signal generator.

11. The sensing arrangement (70) of any of claims 1 to 9, further comprising a switching circuit (76) adapted to switch an input of the processing circuit (73) between the sensing signal ($S_1$) and a bias voltage ($V_B$), wherein:

when the input of the processing circuit is the sensing signal, the processing circuit is adapted to generate the processed sensing signal; and
when the input of the processing circuit is the bias voltage, the processing circuit is adapted to act as the signal generator and generate the second signal.

12. The sensing arrangement of claim 11, wherein the switching circuit (76) is adapted to alternate the input of the processing circuit between the sensing signal ($S_1$) and a bias voltage ($V_B$), and wherein the signal analyzer (75) comprises:

an input coupled to the processing circuit; and

a signal selector adapted to distinguish between the processed sensing signal and the second signal at the input according to a switching state of the switching circuit.

13. The sensing arrangement of claims 1 to 12, wherein the signal analyzer (5, 75) is adapted to compare one or more characteristics of the processed sensing signal and the second signal to determine whether the processed sensing signal has been modified by the second excitation, wherein the one or more characteristics comprises one or more of: a frequency; amplitude; distribution; spectrum or temporal pattern.

14. A lighting system (90) comprising:

a sensing arrangement (1, 70) according to any of claims 1 to 13;

at least one luminaire (92, 93, 94); and

a control system (91) for controlling the at least one luminaire based on the processed sensing signal if the analysis of the processed sensing signal identifies the processed sensing signal as not being modified by the second excitation.

15. The lighting system of claim 14, wherein:

the sensing circuit of the sensing arrangement (1, 70) is adapted for motion sensing, so that the processed sensed signal indicates a presence of a moving object proximate to the sensing arrangement; and

the control system (91) is adapted to trigger the at least one luminaire based on the processed sensed signal.

FIG. 1

$S_P$

$S_2$

FIG. 2

$S_P$

$S_2$

FIG. 3

$S_P$

$S_2$

FIG. 4

FIG. 5

FIG. 6

FIG. 7

FIG. 8

$S_O$

1, 70

91

92   93   94

90

FIG. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 629 054 A2 (MATSUSHITA ELECTRIC IND CO LTD [JP]) 14 December 1994 (1994-12-14) | 1,4,5, 10-13 | INV. G01S7/40 |
| Y | * page 14, line 42 - page 16, line 54 * | 2,3,9, | G01S7/02 |
| | * page 13, line 4 - line 9 * | 14,15 | G01S13/50 |
| A | * figures 22, 24, 26-28 * | 6-8 | G01S13/88 |
| | ----- | | G01S13/56 |
| Y | US 6 426 716 B1 (MCEWAN THOMAS E [US]) 30 July 2002 (2002-07-30) | 2,14,15 | H04B1/10 |
| A | * column 3, line 29 - line 33 * | 1,3-13 | |
| | * column 4, line 25 - line 65 * | | |
| | * column 6, line 1 - line 34 * | | |
| | * figures 1, 2A * | | |
| | ----- | | |
| Y | JP H10 341181 A (FUTABA DENSHI KOGYO KK) 22 December 1998 (1998-12-22) | 3,9 | |
| A | * paragraph [0001] * | 1,2,4-8, | |
| | * paragraph [0011] - paragraph [0012] * | 10-15 | |
| | * figures 1-4 * | | |
| | ----- | | |
| Y | THULASI S ET AL: "Implementation of Frequency Modulated Continuous Wave Radar Altimeter", 2016 ONLINE INTERNATIONAL CONFERENCE ON GREEN ENGINEERING AND TECHNOLOGIES (IC-GET), IEEE, 19 November 2016 (2016-11-19), pages 1-4, XP033092665, DOI: 10.1109/GET.2016.7916644 [retrieved on 2017-05-01] | 3 | |
| A | * page 3, right-hand column, line 6 - page 4, left-hand column, line 5 * | 1,2,4-15 | |
| | ----- | | |

TECHNICAL FIELDS
SEARCHED     (IPC)

G01S
H04B

The present search report has been drawn up for all claims

| Place of search | Date of completion of the search | Examiner |
|---|---|---|
| Munich | 11 December 2018 | Köppe, Maro |

## ANNEX TO THE EUROPEAN SEARCH REPORT
## ON EUROPEAN PATENT APPLICATION NO.

EP 18 18 1231

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2018

| Patent document cited in search report | | Publication date | Patent family member(s) | | Publication date |
|---|---|---|---|---|---|
| EP 0629054 | A2 | 14-12-1994 | AT | 223630 T | 15-09-2002 |
| | | | AU | 685791 B2 | 29-01-1998 |
| | | | AU | 694395 B2 | 16-07-1998 |
| | | | CA | 2125220 A1 | 09-12-1994 |
| | | | CN | 1101182 A | 05-04-1995 |
| | | | DE | 69431274 D1 | 10-10-2002 |
| | | | DE | 69431274 T2 | 09-01-2003 |
| | | | DK | 0629054 T3 | 11-11-2002 |
| | | | EP | 0629054 A2 | 14-12-1994 |
| | | | EP | 1195912 A2 | 10-04-2002 |
| | | | NO | 942120 A | 09-12-1994 |
| | | | TW | 328665 B | 21-03-1998 |
| | | | US | 5982901 A | 09-11-1999 |
| US 6426716 | B1 | 30-07-2002 | US | 6426716 B1 | 30-07-2002 |
| | | | WO | 02068989 A1 | 06-09-2002 |
| JP H10341181 | A | 22-12-1998 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ISAR MOSTAFANEZHAD.** Cancellation of Unwanted Doppler Radar Sensor Motion Using Empirical Mode Decomposition. *IEEE SENSORS JOURNAL,* May 2013, vol. 13 (5